# EUROPÄISCHE PATENTSCHRIFT

(11) **EP 1 499 463 B1**
(45) Veröffentlichungstag und Bekanntmachung des Hinweises auf die Patenterteilung: **21.06.2006**
(21) Anmeldenummer: 03727210.1
(22) Anmeldetag: 17.04.2003
(51) Int. Cl.: B22D 19/02, F16D 55/02

(54) **LEICHTMETALL-GUSSTEIL MIT INTEGRIERTEM VERST RKUNGSMATERIAL**
LIGHT METAL CAST PART WITH INTEGRATED REINFORCEMENT MATERIAL
PIECE MOULEE EN METAL LEGER DANS LAQUELLE EST INTEGRE UN MATERIAU DE RENFORT

(30) Priorität: 19.04.2002 DE 10217665
(43) Veröffentlichungstag der Anmeldung: 26.01.2005
(73) Patentinhaber: ae group ag, 36179 Bebra-Iba (DE)
(72) Erfinder: LUTZE, Peter, 98587 Bermbach (DE)
(74) Vertreter: Lins, Edgar
(86) Internationale Anmeldenummer: PCT/DE2003/001320
(87) Internationale Veröffentlichungsnummer: WO 2003/089169

(56) Entgegenhaltungen:
- WO-A-95/12468
- US-A- 4 381 336
- US-A- 5 433 300
- PATENT ABSTRACTS OF JAPAN vol. 010, no. 265 (M-515), 10. September 1986 (1986-09-10) & JP 61 088956 A (HITACHI METALS LTD), 7. Mai 1986 (1986-05-07)
- SCHULZ, P. (FZS LEICHTMETALL KOMPETENZZENTRUM RANSHOFEN) ET AL: "Fabrication of carbon fibre reinforced Al- inserts for local reinforcement of automotive components." 32ND ISATA SYMPOSIUM PROCEEDINGS: MATERIALS FOR ENERGY-EFFECTIVE VEHICLES (JUNE 1999), 185-192, NUMERICAL DATA, GRAPHS, 7 REF. ISATA. DUSSELDORF TRADE FAIR, 32A QUEEN STREET, CRYDON, CR0 1SY, UK CONFERENCE: 32ND ISATA (INTERNATIONAL SYMPOSIUM ON AUTO, XP009013412

## Beschreibung

Die Erfindung betrifft ein Leichtmetall-Gussteil mit einem Grundkörper, einem eine Biegung zum Grundkörper aufweisenden Schenkelteil, das zur Belastung in Öffnungsrichtung der Biegung ausgelegt ist, und mit einem in das Gussteil integrierten, aus Fasern oder Schwammkeramik gebildeten Verstärkungsmaterial, das eine wesentlich größere Länge als Dicke aufweist und vom Leichtmetall des Gussteils durchdrungen ist.

In vielen Anwendungsbereichen, wie beispielsweise im Automobilbau, Flugzeugbau usw., wird versucht, Eisen-Gussteile durch Leichtmetall-Gussteile, insbesondere Aluminium-Gussteile, zu ersetzen, um Gewicht einzusparen.

Bei einer möglichen Ersetzung von Eisen-Gussteilen durch Leichtmetall-Gussteile ist zu beachten, dass Leichtmetall-Gussteile regelmäßig eine geringere Festigkeit und eine geringere Haltbarkeit gegenüber verformende Belastungen aufweisen.

Durch JP 61-088956 ist es bekannt, ein Leichtmetall-Gussteil dadurch zu verstärken, dass ein entsprechend geformter Eisenwinkel in das Gussteil eingegossen wird. Da das Material des Eisenwinkels von dem Leichtmetall des Gussteils nicht durchdrungen werden kann, sind in dem Eisenwinkel Durchgangslöcher vorgesehen, durch die das Leichtmetall beim Eingießen fließen kann. Durch den eingegossenen Eisenwinkel erhöht sich das Gewicht des Gussteils.

US 4,381,336 offenbart ein auf Biegung beanspruchtes Gussteil, in das ein Stützelement eingegossen wird. Das Gussmaterial kann dabei in die Oberfläche des Stützelements eindringen. Ein Durchdringen des Materials des Stützelements ist nicht vorgesehen. Das gebogene Stützelement wird so in das Werkstück eingegossen, dass es bei Belastung in der neutralen Phase des Gussteils liegt, also weder auf Zug noch auf Druck belastet wird.

US 5,433,300 offenbart einen Bremssattel, in den Keramikstützteile eingegossen werden. Die Keramikstützteile sind dreidimensionale, an die Form des Bremssattels angepasste Teile, die somit keine wesentlich größere Länge als Dicke aufweisen. Die damit hergestellten Bremssättel sind somit notwendigerweise sehr voluminös.

WO 95/12469 offenbart einen Bremssattel der eingangs erwähnten Art, in den als Verstärkungselement ein abgewinkeltes Stahl- oder Keramikteil eingegossen wird. Dieses Verstärkungsteil sitzt nahe der inneren Oberfläche des die Biegung zum Grundkörper aufweisenden Schenkelteils, sodass das Verstärkungsteil bei der Biegungsbelastung auf Zug belastet wird.

Es ist ferner bekannt, in Aluminium-Gussteile beim Gießvorgang Keramikfasern einzulegen, um die hohe Haltbarkeit der Keramikfasern für das herzustellende Gussteil auszunutzen. Die hohe Stabilität der Fasern bezieht sich jedoch ausschließlich auf eine Zugbelastung der Fasern, da Fasern gegenüber Druck in Längsrichtung nicht belastbar sind.

Es hat sich gezeigt, dass Leichtmetall-Gussteile der eingangs erwähnten Art, wie sie beispielsweise als Bremssättel von Scheibenbremsen verwendet werden könnten, durch in üblicher Weise eingebrachte Fasern nicht verstärkt werden, sondern tatsächlich geschwächt werden. Der Grund hierfür ist nicht vollständig aufgeklärt. Es mag jedoch sein, dass die durch die Fasern bewirkte Werkstofftrennung des Gussteils zu Belastungsspitzen führt, die den Werkstoffverbund zerstören. Die entsprechend verstärkten Gussteile weisen somit eine erheblich reduzierte Festigkeit auf.

Der vorliegenden Erfindung liegt die Aufgabe zugrunde, Leichtmetall-Gussteile der eingangs erwähnten Art hinsichtlich ihrer Festigkeit und/oder Lebensdauer zu verbessern.

Ausgehend von dieser Problemstellung ist erfindungsgemäß ein Leichtmetall-Gussteil der eingangs erwähnten Art dadurch gekennzeichnet, dass das Verstärkungsmaterial so angeordnet ist, dass es bei Belastung der Biegung, in der die Biegung (2) zu einem größeren Winkel tendiert, lediglich auf Druck beansprucht wird.

In völlig überraschender Weise hat es sich gezeigt, dass durch die Einbringung eines Verstärkungsmaterials der genannten Art in das Leichtmetall-Gussteil so, dass es bei Belastung der Biegung, in der die Biegung (2) zu einem größeren Winkel tendiert, lediglich auf Druck beansprucht wird, eine erhebliche Verbesserung der Festigkeit des Gussteils erreicht wird. Dies ist deswegen überraschend, da beispielsweise Fasern als Verstärkungsmaterial für eine Druckbeanspruchung keine Verstärkung des Gussteils erwarten lassen konnten. Der Grund für die Erhöhung der Haltbarkeit des Gussteils durch eine flächige Verstärkungseinlage, die bei Belastung, in der die Biegung (2) zu einem größeren Winkel tendiert, lediglich auf Druck beansprucht wird, ist nicht aufgeklärt.

Die erfindungsgemäße Einlage des Verstärkungsmaterials beeinträchtigt somit die Steifheit des Gussteils nicht, weil offenbar bei der bei Belastung entstehenden Druckbeanspruchung keine materialtrennenden Vorgänge auftreten. Vielmehr dürfte die Verstärkungseinlage zu einer Erhöhung der Elastizität des Gussteils führen, die das Gussteil deutlich zahlreichere Belastungszyklen unbeschadet aushalten lässt.

Das erfindungsgemäß verwendete Verstärkungsmaterial kann vorzugsweise durch Keramikfasern gebildet sein, die vorzugsweise parallel zueinander in entsprechenden Lagen verlegt sind. Das Verstärkungsmaterial kann erfindungsgemäß aber auch eine Schwammkeramik sein, die vom Leichtmetall beim Gießvorgang durchdrungen wird.

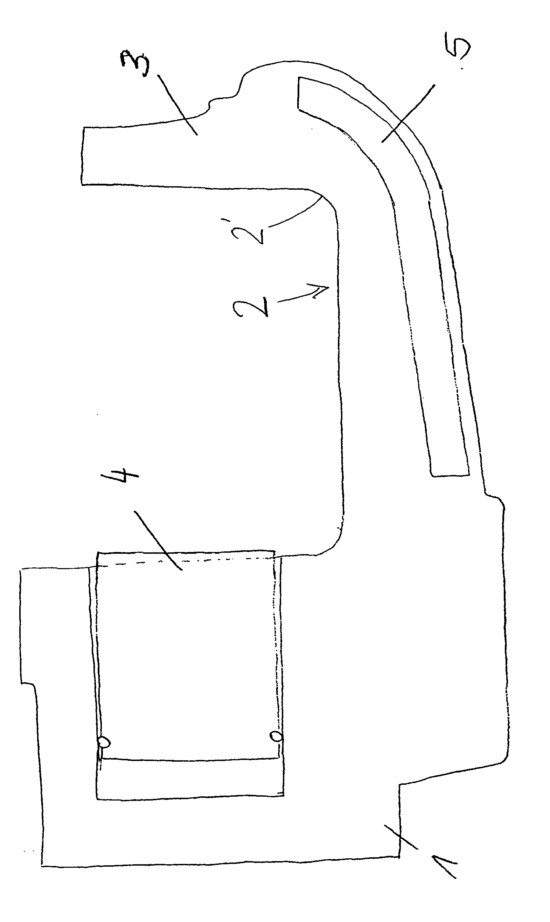

Die Erfindung soll im folgenden anhand eines in der Zeichnung dargestellten Ausführungsbeispiels näher erläutert werden.

Die Zeichnung zeigt einen Hochschnitt durch einen Bremssattel, der im Wesentlichen U-förmig ausgebildet ist und einen Grundkörper 1 mit einem an ihn angesetzten L-förmigen Schenkel 2 aufweist. Der eine Biegung 2' aufweisende L-förmige Schenkel 2 ist an den Grundkörper 1 im Wesentlichen rechtwinkelig angesetzt, sodass sein freies Schenkelende 3 im Wesentlichen parallel zum Grundkörper 1 steht. Der freie Innenraum des gebildeten U dient zur Aufnahme einer Bremsscheibe. In den Grundkörper 1 ist ein Druckkolben 4 gelagert, der in Richtung auf das freie Schenkelende 3 verschiebbar ist, um einen Bremsdruck auszuüben. Der freie Schenkel 3 bildet dann ein Widerlager gegen den Bremsdruck. Der Bremsdruck tendiert daher dazu, dass freie Schenkelende 3 von dem Grundkörper 1 weg zu biegen, also die etwa rechtwinkelige Biegung des L-förmigen Schenkels 2 zu einem größeren Winkel hin zu öffnen. An der inneren Oberfläche des L-förmigen Schenkels 2 findet durch die Öffnung des Winkels somit eine Zugbelastung statt.

In dem dargestellten Ausführungsbeispiel weist der L-förmige Schenkel eine Einlage aus einem Verstärkungsmaterial 5 auf, das sich über die Biegung 2' des L-förmigen Schenkels 2 erstreckt, jedoch im Außenbereich der Biegung 2', also nahe der äußeren Oberfläche des L-förmigen Schenkels 2 angeordnet ist. Bei einer Öffnung des L-förmigen Schenkels durch die Bremsbelastung wird somit das Verstärkungsmaterial 5 in der dargestellten Anordnung auf Druck beansprucht.

Wäre das Verstärkungsmaterial in üblicher Weise nahe der inneren Oberfläche angeordnet, würde es zu einer erheblichen Reduzierung der Steifheit und der Haltbarkeit des Bremssattels führen.

Durch die erfindungsgemäße Anordnung des Verstärkungsmaterials 5 mit einer Druckbeanspruchung beim Bremsvorgang wird hingegen eine erhöhte Steifheit erreicht und eine erheblich erhöhte Haltbarkeit und Lebensdauer des Bremssattels bewirkt.
Das Verstärkungsmaterial kann aus flächigen Lagen von Keramikfasern oder aus einer flächigen Anordnung einer Schwammkeramik bestehen, wobei in jedem Fall die Stärke des Verstärkungsmaterials wesentlich kleiner ist als die Länge des Verstärkungsmaterials 5 in Richtung der Biegung 2'.

## Patentansprüche

1. Leichtmetall-Gussteil mit einem Grundkörper (1), einem eine Biegung (2') zum Grundkörper (1) aufweisenden Schenkelteil (2), das zur Belastung in Öffnungsrichtung der Biegung (2') ausgelegt ist und mit einem in das Gussteil integrierten, aus Fasern oder Schwammkeramik gebildeten Verstärkungsmaterial (5), das eine wesentlich größere Länge als Dicke aufweist und vom Leichtmetall des Gussteils durchdrungen ist, **dadurch gekennzeichnet, dass** das Verstärkungsmaterial (5) so angeordnet ist, dass es bei Belastung der Biegung (2'), in der die Beigung (2) zu einem größeren Winkel tendiert, lediglich auf Druck beansprucht wird.

2. Leichtmetall-Gussteil nach Anspruch 1, **dadurch gekennzeichnet, dass** es aus Aluminium gebildet ist.

3. Leichtmetall-Gussteil nach Anspruch 1, **dadurch gekennzeichnet, dass** es aus Magnesium gebildet ist.

## Claims

1. Light metal casting with a main body (1), a side piece (2) with a curved portion (2') to the main body (1), which is designed for loading in the direction of opening of the curved portion (2') and with a reinforcing material (5) formed from fibres or sponge ceramic and incorporated into the casting, and said reinforcing material (5) has a far greater length than thickness and is penetrated by the light metal of the casting, **characterized in that** the reinforcing material (5) is arranged in such a way that during loading of the curved portion (2'), in which the curved portion (2') tends towards a larger angle, it is only loaded in compression.

2. Light metal casting according to Claim 1, **characterized in that** it is formed from aluminium.

3. Light metal casting according to Claim 1, **characterized in that** it is formed from magnesium.

## Revendications

1. Pièce moulée en métal léger comprenant un corps de base (1), une partie formant poteau (2) présentant un coude (2') vers le corps de base (1), qui pour la charge est dimensionné dans la direction d'ouverture du coude (2') et comprenant un matériau de renforcement (5) en fibres ou en mousse de céramique intégré dans la pièce moulée, qui présente une longueur nettement plus grande que l'épaisseur et est imprégné par le métal léger de la pièce moulée, **caractérisée en ce que** le matériau de renforcement (5) est disposé de telle sorte que lors de la charge du coude (2'), par laquelle le coude (2) tend vers un angle plus élevé, le matériau est seulement soumis à une pression.

2. Pièce moulée en métal léger selon la revendication 1, **caractérisée en ce qu'**elle est réalisée en aluminium.

3. Pièce moulée en métal léger selon la revendication 1, **caractérisée en ce qu'**elle est réalisée en magnésium.
